# EUROPÄISCHE PATENTANMELDUNG

(11) **EP 1 332 677 A1**
(43) Veröffentlichungstag der Anmeldung: **06.08.2003**
(21) Anmeldenummer: 02027217.5
(22) Anmeldetag: 06.12.2002
(51) Int. Cl.: A22C 17/00

(54) **Messer für Kotelettschneider**

(30) Priorität: 24.01.2002 DE 10202861
(71) Anmelder: SCHMID & WEZEL GmbH & Co., D-75433 Maulbronn (DE)
(72) Erfinder: Lay, Norbert, 71149 Bondorf (DE)
(74) Vertreter: Dreiss, Fuhlendorf, Steimle & Becker

(57) **Zusammenfassung**

Messer (10, 20) zum Ausschälen von Kotelettsträngen (1) mit Anschliff der Schneidkanten (14, 24) derart, dass sie nicht in die Rippenknochen (2) bzw. Federknochen (3) einschneiden und gleichzeitig ein möglichst nahes Schneiden an den Rippen- bzw. Federknochen gewährleisten.

## Beschreibung

Die Erfindung betrifft ein Messer zum maschinellen Trennen eines Kotelettstranges von den Rippenknochen eines Teiles eines geschlachteten Tieres, gemäß dem Oberbegriff des Anspruchs 1.

Die Erfindung betrifft außerdem ein Messer zum maschinellen Trennen eines Kotelettstranges von den Federknochen eines Teiles eines geschlachteten Tieres, gemäß dem Oberbegriff des Anspruchs 5.

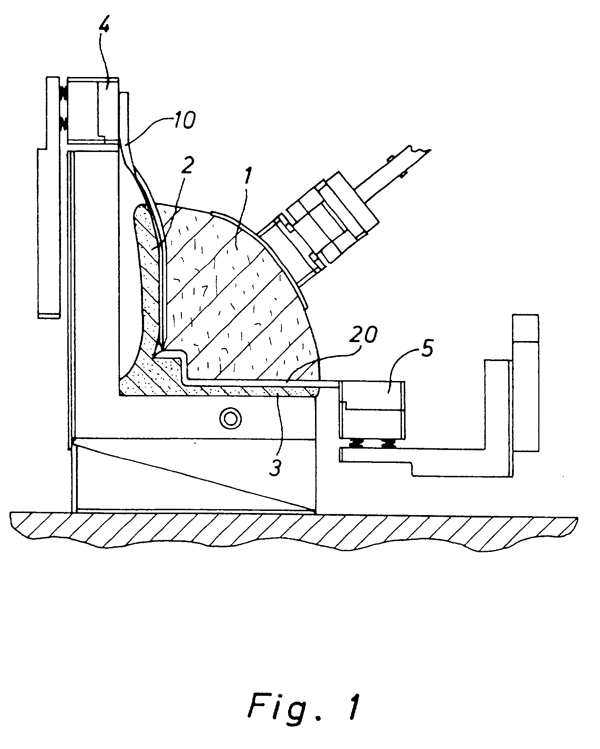

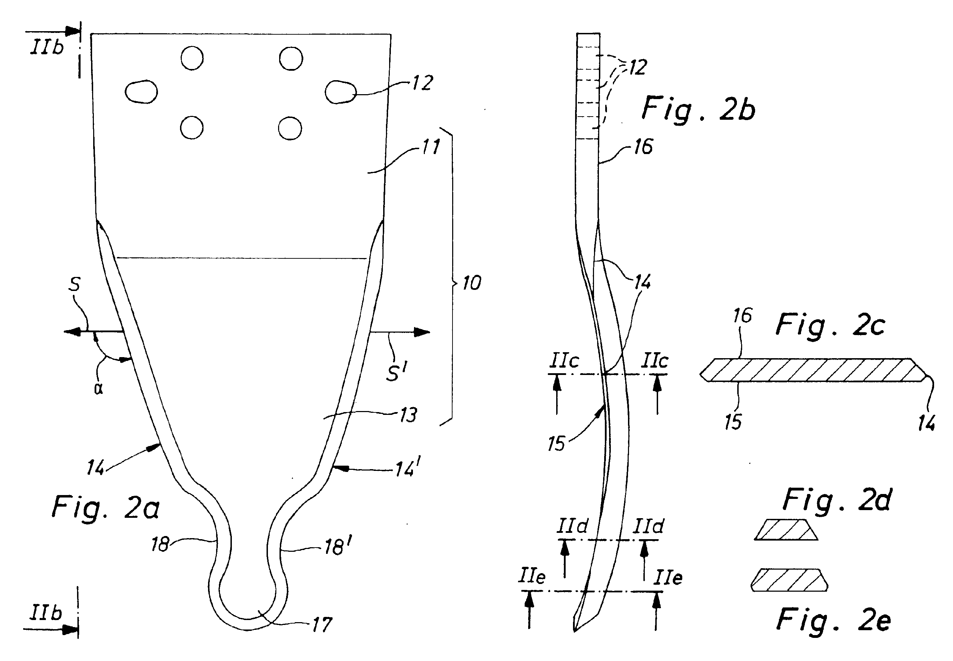

Derartige Messer sind in der älteren deutschen Patentanmeldung 100 37 300.3 (vgl. Figur 2, Bezugszeichen 9, 10) gezeigt. Sie ist in Fig. 1 der vorliegenden Anmeldung wiedergegeben. Diese Anordnung mit einem aus Kotelettstrang 1, Rippenknochen 2 und Federknochen 3 bestehenden Teil eines geschlachteten Tieres ist in Fig. 1 gezeigt. Sie weist ein Messer 10 zum Trennen des Kotelettstranges 1 von den Rippenknochen 2 und ein Messer 20 zum Trennen des Kotelettstranges von dem Federknochen 3 auf. Das Messer 10 ist mit dem linear senkrecht zur Zeichenebene beschriebenen Antrieb 4 verbunden; das Messer 20 mit einem gleichermaßen verschiebbaren Antrieb 5.

Der vorliegenden Erfindung liegt die Aufgabe zu Grunde, diese beiden miteinander gleichzeitig zum Ausschälen von Kotelettsträngen eingesetzten Messer in ihrer Wirkungsweise zu verbessern. Das bedeutet, dass die Schneidkanten der Messer einerseits nicht in die Knochen schneiden sollen, jedoch andererseits möglichst nah am Knochen schneiden sollen, d.h. so, dass alles Fleisch mit dem Kotelettstrang ausgeschält wird.

Die Lösung dieser Aufgabe erfolgt durch die besondere Ausbildung der Messer gemäß den in den Kennzeichen der Patentansprüche 1 bzw. 5 angegebenen Merkmalen. Vorteilhafte Weiterbildungen der Erfindung sind in den Unteransprüchen definiert.

Im Folgenden werden Ausführungsbeispiele der Erfindung unter Bezugnahme auf die beigefügten Zeichnungen näher beschrieben.

Es stellen dar:
- Fig. 2a: Eine Draufsicht auf ein Ausführungsbeispiel eines Messers 10 zum Abtrennen des Kotelettstranges 1 von Rippenknochen 2;
- Fig. 2b: eine Ansicht des Messers 10 nach Fig. 2a in Richtung der Pfeile IIb - IIb;
- Fig. 2c: einen Schnitt entlang der Pfeile IIc - IIc in Fig. 2b;
- Fig. 2d: einen Schnitt entlang der Pfeile IId - IId in Fig. 2b;
- Fig. 2e: einen Schnitt entlang der Pfeile IIe - IIe in Fig 2b;
- Fig. 3a: eine Draufsicht auf ein Ausführungsbeispiel eines Messers 20 zum Abtrennen des Kotelettstranges 1 von Federknochen 3;
- Fig. 3b: eine Ansicht des Messers 20 nach Fig. 3a in Richtung der Pfeile IIIb - IIIb;
- Fig. 3c: eine Draufsicht entsprechend Fig. 3a auf ein weiteres Ausführungsbeispiel eines Messers 20.

Das Messer 10 dient zum Abtrennen des Kotelettstranges 1 von den Rippenknochen 2. Das Messer 10 besteht aus einer Befestigungsplatte 11 und einem flächigen bauchigen Bereich 13. Die Befestigungsplatte 11 weist Bohrungen 12 auf. Diese dienen zur Befestigung des Messers 10 an einem Antrieb 4. Da auch andere Möglichkeiten der Befestigung möglich sind, wird in den Ansprüchen auf die Befestigungsplatte und die Bohrungen als "Befestigungsmittel" Bezug genommen. Die Formung des Bereichs 13 dient zur Anpassung an die Krümmung der Rippenknochen 2.

Die Schneidrichtung S läuft in Figur 1 senkrecht zur Bildebene, in Fig. 2a in Richtung des eingezeichneten Pfeils S. Das Messer 10 weist in Schneidrichtung S eine Schneidkante 14 auf, die durch Anschliff der parallelen Seitenflächen 15, 16 des Messers 10 gebildet ist und die von der an dem Rippenknochen 2 anliegenden Seitenfläche 15 des Messers 10 einen gewissen Abstand einhält. Sie weist in der entgegengesetzten Schneidrichtung S' eine korrespondierende Schneidkante 14' auf. Wie aus Fig. 2a ersichtlich ist, verjüngt sich der Bereich 13 zwischen den beiden symmetrisch angeordneten Schneidkanten 14, 14' von der Befestigungsplatte 11 zu dem freien Endbereich 17 hin. Dies bewirkt, dass die Schneidkante 14 in Schneidrichtung S von ihrem in der Nähe der Befestigungsplatte 11 gelegenen Bereich zu ihrem freien Endbereich 17 hin derart schräggestellt ist, dass der der Befestigungsplatte 11 nahe Bereich vor dem freien Endbereich 17 zum Schneideingriff mit dem Kotelettstrang 1 gelangt. Die Schrägstellung der Schneidkante 14 gegenüber der Schneidrichtung S weist einen Winkel α von 80° bis 50°, vorzugsweise 70° auf. Damit wird erreicht: Betrachtet man den Kotelettstrang 1 entlang einer Linie senkrecht zur Schneidrichtung, so schneidet infolge des durch die Schrägstellung gegebenen Vorlaufs der Schneidkante 14 diese das Fleisch zuerst in dem der Befestigungsplatte 11 nahem Bereich und dann erst mit dem - in Bewegungsrichtung zurückgesetzten - Teil der Schneidkante, der der Einbuchtung 18 und dem Endbereich 17 zugeordnet ist. Während also die Schneidkante 14 mit dem freien Endbereich 17 und im Bereich der Einbuchtung 18 schneidet, wird der senkrecht zur Schneidrichtung S darüberliegende Teil des Kotelettstranges 1, der bereits geschnitten ist, von dem bauchigen flächigen Bereich 13 des Messers gehalten. Dieser schräge und mit Einbuchtung 18 versehene Vorlauf der Schneidkante 14 dient also zum einen einer exakten Führung des Schnitts und zum anderen einer Kraftreduzierung und sichert damit einen Schnitt nahe dem Knochen mit maximaler Fleischausbeute und hoher Schnittqualität. Eine entsprechende Ausbuchtung 18' ist an der Schneidkante 14', die in Schneidrichtung S' wirksam wird, vorgesehen.
Die Schneidkante 14 hat, von der Schneidrichtung aus betrachtet, einen besonderen Verlauf (Fig. 2b). Sie verläuft von der Befestigungsplatte 11 bis zu der Einbuchtung 18 in einem Abstand von der an den Rippenknochen 2 anliegenden Seitenfläche 15, der ein Viertel bis ein Halb der Dicke des Messers 10 beträgt (vgl. Fig. 2c). Die Schneidkante 14 verläuft daran anschließend im Bereich der Einbuchtung 18 im wesentlichen in linearer Fortsetzung der an der Rippe 2 anliegenden Seitenfläche 15 des Messer 10 (Fig. 2d), und hat im freien Endbereich 17 des Messers 10 einen Abstand von ein Fünftel bis ein Halb der Dicke des Messers 10 von der Seitenfläche 15 (Fig. 2e). Die Dicke des Messers 10 zwischen den im übrigen parallelen Seitenflächen 15 und 16 beträgt 3 bis 5 mm, vorzugsweise 4 mm. Insgesamt beschreibt die Schneidkante 14 vom Anschliff an einen geschwungenen Bogen, der einen bestimmten Abstand von der Seitenfläche 15 einhält. Auf diese Weise wird gewährleistet, dass im mittleren Schneidbereich die Schneidkante 14 im Bereich 13 immer um einen gewissen Mindestabstand vom Rippenknochen entfernt durch die Seitenfläche 15 geführt wird. Dadurch wird verhindert, dass das Messer 10 in die Rippenknochen einschneiden kann.

Im Ausführungsbeispiel hat das Messer 10 in Folge der Anordnung von zwei Schneidkanten 14, 14' für die entgegengesetzten Schneidrichtungen S, S' eine symmetrische Ausbildung.

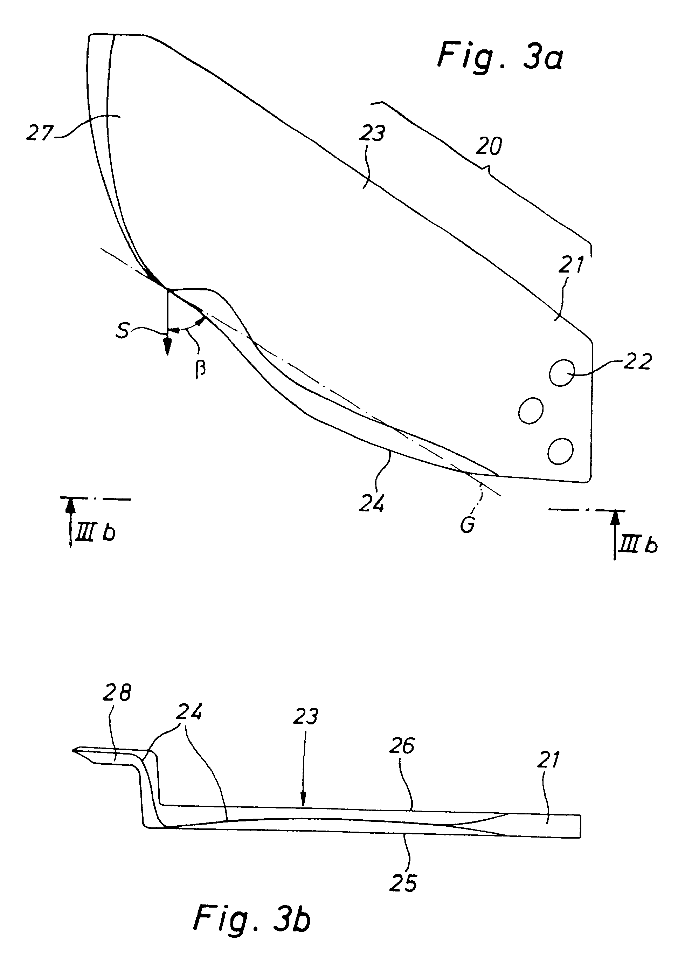

Fig. 3a zeigt eine Vorderansicht des Messers 20 zum Trennen des Kotelettstrangs 1 von den Federknochen 3. Das Messer 20 ist im Wesentlichen horizontal angeordnet (Fig. 1) und weist eine Befestigungsplatte 21 und einen flächigen Bereich 23 auf, der am freien Ende des Messers 20 in einen treppenförmigen Absatz 28 übergeht. Die Befestigungsplatte 21 weist Bohrungen 22 auf, die zur Befestigung des Messers 20 an einem Antrieb 5 dienen. Da auch andere Möglichkeiten der Befestigung möglich sind, wird in den Ansprüchen darauf als "Befestigungsmittel" Bezug genommen.

Der treppenförmige Absatz 28 dient zur Anpassung an die Form der Verbindung der Federknochen 3 mit den Rippenknochen 2 (Fig. 3b).

Die Schneidrichtung in Fig. 3a ist ebenfalls mit einem Pfeil S gekennzeichnet. Das Messer 20 weist in Schneidrichtung S eine Schneidkante 24 auf, die durch den Anschliff der ansonsten parallelen Seitenflächen 25, 26 gebildet ist und von der an dem Federknochen 3 anliegenden Seitenfläche 25 des Messers 20 einen gewissen Abstand einhält. Wie aus Fig. 3a ersichtlich ist, ist die Schneidkante 24 von ihrem in Nähe der Befestigungsplatte 21 gelegenen Bereich bis hin zu ihrem freien Endbereich 27 - ebenfalls wie auch die Schneidkante 14 des Messers 10 - derart schräggestellt, dass der der Befestigungsplatte 21 nahe Bereich der Klinge 23 vor dem freien Endbereich 27 zum Schneideingriff mit dem Kotelettstrang 1 gelangt. Der geschwungene gegenüber der Schneidrichtung S schräggestellte Bereich der Schneidkante 24 zwischen Befestigungsplatte 21 und Absatz 28 lässt sich angenähert durch die strichpunktierte Gerade G darstellen. Der Winkel β zwischen S und G beträgt 20-70°, vorzugsweise ca. 45°. Der Effekt dieser Ausbildung ist analog wie bereits beim Messer 10 geschildert: Der von der Schneidkante 24 nahe des Absatzes 20 soeben geschnittene Teil des Kotelettstranges 1 wird während des Schnitts von dem flächigen Bereich 23 gehalten, wobei die Schneidkante 24 in diesem Bereich dem Absatz 28 vorausläuft. Dies sichert einerseits hohe Fleischausbeute und verhindert andererseits ein Einschneiden in die Federknochen 3.

Der Verlauf der Schneidkante 24, von der Schneidrichtung her gesehen, ergibt sich aus Fig. 3b. Sie verläuft von der Befestigungsplatte 21 bis in Nähe des Absatzes 28 in einem Abstand von der an dem Federknochen 3 anliegenden Seitenfläche 25, der ein Viertel bis ein Halb der Dicke des Messers 20 beträgt, die ihrerseits 3 - 5 mm, vorzugsweise ca. 4 mm beträgt. Daran anschließend nähert sich die Schneidkante 24 im Bereich des Übergangs in den treppenförmigen Absatz 28 bis auf ein Zehntel bis ein Drittel der Seitenfläche 25. Sie kann auch ganz in linearer Verlängerung der Seitenfläche 25 liegen. Im Bereich des Absatzes 28 hat die Schneidkante 25 S-Form. Zum Ende des höhergelegenen Bereichs des Absatzes 28 hin hat die Schneidkante 24 von der Seitenfläche 25 einen Abstand, der ein Halb bis drei Viertel der Dicke des Messers 20 beträgt. Insgesamt beschreibt der Verlauf der Schneidkante 24 einen z-förmig geschwungenen und lang auslaufenden Bogen zwischen den Seitenflächen 25 und 26, der einen bestimmten Mindestabstand von der Seitenfläche 25 einhält.

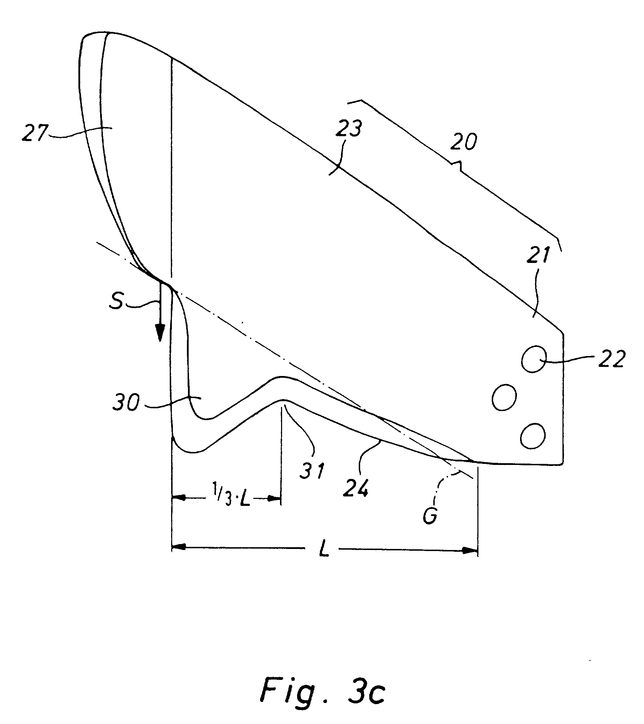

Beim Ausführungsbeispiel nach Fig. 3c weist die Schneidkante 24 vor dem Übergang des Bereichs 23 in den Absatz 28 eine Nase 30 auf, die etwa ein Drittel des Abstandes L zwischen der Grenze des Bereichs 23 und der Befestigungsplatte 21 und dem Absatz 28 einnimmt. Es entsteht so auch beim Messer 20 eine Einbuchtung, nämlich die Einbuchtung 31. Auch diese Form hat sich als vorteilhaft erwiesen.

## Patentansprüche

1. Messer (10) zum maschinellen Trennen eines Kotelettstranges (1) von den Rippenknochen (2) eines Teiles eines geschlachteten Tieres, das den Kotelettstrang (1), die zugehörigen Rippenknochen (2) und die zugehörigen Federknochen (3) umfasst, das
(a) zur Anpassung an die Krümmung der Rippenknochen (2) einen flächigen bauchigen gekrümmten Bereich (13) aufweist, und mit
(b) Mitteln (11, 12) zur Befestigung des Messers (10) an einem Antrieb (4) versehen ist, und
(c) in Schneidrichtung (S) eine Schneidkante (14) aufweist, die durch Anschliff der parallelen Seitenflächen (15, 16) des Messers (10) gebildet ist und von der an den Rippenknochen (2) anliegenden Seitenfläche (15) des Messers (10) einen gewissen Abstand hat,
**dadurch gekennzeichnet, dass**
(d) die Schneidkante (14) von ihrem in Nähe der Befestigungsmittel gelegenen Bereich zu ihrem freien Endbereich (17) hin zur Schneidrichtung (S) derart schräggestellt ist, dass der den Befestigungsmitteln nahe Bereich (13) vor dem freien Endbereich (17) zum Schneideingriff mit dem Kotelettstrang (1) gelangt,
(e) die Schneidkante (14) in Nähe ihres freien Endes (17) eine sich etwa über ein Drittel der Länge des Messers (10) erstreckende Einbuchtung (18) aufweist, und
(f) die Schneidkante (14) ferner von ihrem den Befestigungsmitteln (11, 12) nahen Ende bis zu der Einbuchtung (18) in einem Abstand von der an den Rippenknochen (2) anliegenden Seitenfläche (15) verläuft, der ¼ bis ½ der Dicke des Messers (10) beträgt,
(g) daran anschließend im Bereich der Einbuchtung (18) im Wesentlichen in linearer Fortsetzung der an dem Rippenknochen (2) anliegenden Seitenfläche (15) des Messers (10) verläuft, und
(h) am freien Ende (17) des Messers (10) einen Abstand von 1/5 bis ½ der Dicke des Messers (10) von der genannten Seitenfläche (15) hat.

2. Messer nach Anspruch 1, **dadurch gekennzeichnet, dass** das Messer (10) zwei zueinander symmetrisch ausgebildete Schneidkanten (14, 14') zum Schneiden in entgegengesetzten Schneidrichtungen (S, S') aufweist, so dass jeweils eine der Schneidkanten (14, 14') in einer Richtung der beiden linearen Bewegungsrichtungen (S, S') zum Schneideingriff gelangt.

3. Messer nach Anspruch 1 oder 2, **dadurch gekennzeichnet, dass** die Dicke des Messers (10) 3 bis 5 mm, vorzugsweise ca. 4 mm, beträgt.

4. Messer nach einem der Ansprüche 1 bis 3, **dadurch gekennzeichnet, dass** die Schrägstellung der Schneidkante (14) gegenüber der Schneidrichtung (S) einen Winkel von 80 bis 50°, vorzugsweise 70°, aufweist.

5. Messer (20) zum maschinellen Trennen eines Kotelettstrangs (1) von dem Federknochen (3) eines Teiles eines geschlachteten Tieres, das den Kotelettstrang (1), die zugehörigen Federknochen (3) und die zugehörigen Rippenknochen (2) umfasst, das
(a) zur Anlage an den Federknochen (3) einen flächigen Bereich (23) aufweist und mit
(b) Mitteln (21, 22) zur Befestigung an einem Antrieb (5) versehen ist, und
(c) in Schneidrichtung (S) eine Schneidkante (24) aufweist, die durch den Anschliff der parallelen Seitenflächen (25, 26) des Messers gebildet ist, und
(d) an ihrem den Befestigungsmitteln (21, 22) abgewandten freien Ende (27) einen treppenförmigen Absatz (28) zur Anpassung an die Form der Verbindung der Federknochen (3) mit den Rippenknochen (2) aufweist,
**dadurch gekennzeichnet, dass**
(e) die Schneidkante (24) von ihrem in Nähe der Befestigungsmittel (21, 22) gelegenen Bereich (23) bis zu ihrem freien Endbereich (27) hin zur Schneidrichtung (S) derart schräg gestellt ist, dass der den Befestigungsmitteln (21, 22) nahe Bereich vor dem freien Endbereich (27) zum Schneideingriff mit dem Kotelettstrang (1) gelangt, und
(f) dass die Schneidkante (24) ferner von ihrem den Befestigungsmitteln (21, 22) nahen Ende bis zu dem genannten Absatz (28) in einem Abstand von der an dem Federknochen (3) anliegenden Seitenfläche (25) verläuft, der ¼ bis ½ der Dicke des Messers (20) beträgt, und
(g) daran anschließend sich im Bereich des Übergangs in den Absatz (28) bis auf 1/10 bis 1/3 an die Seitenfläche (25) oder ganz annähert, und dann
(h) im Bereich des Absatzes (28) S-Form hat, und
(i) zum Ende des höhergelegenen Bereichs des Absatzes (28) von der Seitenfläche (25) einen Abstand hat, der ½ bis ¾ der Dicke des Messers (20) beträgt.

6. Messer nach Anspruch 5, **dadurch gekennzeichnet, dass** die Dicke des Messers (20) ca. 3 bis 5 mm, vorzugsweise ca. 4 mm, beträgt.

7. Messer nach einem der Ansprüche 5 oder 6, **dadurch gekennzeichnet, dass** die Schneidkante (24) in dem flächigen Bereich (23) einen in Draufsicht gekrümmten Verlauf hat, der gegenüber der Schneidrichtung (S) angenähert (G) einen Winkel β von 60 bis 20°, vorzugsweise 45°, aufweist.

8. Messer nach einem der Ansprüche 5 - 8, **dadurch gekennzeichnet, dass** der flächige Bereich (23) und die Schneidkante (24) vor dem Übergang in den Absatz (28) eine Nase (30) aufweist, deren Breite etwa ein Drittel des Abstandes (L) vom Absatz (28) zu der Befestigungsplatte (21) beträgt, so dass sich zwischen Nase (30) und dem angrenzenden Teil der Schneidkante (24) eine Einbuchtung (31) ergibt.

9. Vorrichtung zum Ausschälen eines Kotelettstranges (1) von einem Teil eines geschlachteten Tieres, der den Kotelettstrang (1), die zugehörigen Rippenknochen (2) und die zugehörigen Federknochen (3) umfasst, einem ersten Messer (10) zum Trennen des Kotelettstrangs (1) von den Rippenknochen (2) und einem zweiten Messer (20) zum Trennen des Kotelettstranges (1) von den Federknochen (3), **dadurch gekennzeichnet, dass** zum Trennen von den Rippenknochen (2) ein Messer (10) nach einem der Ansprüche 1 bis 4, zum Trennen von den Federknochen (3) ein Messer (20) nach einem der Ansprüche 5 bis 8 verwendet wird.
